# EUROPÄISCHE PATENTSCHRIFT

(11) **EP 2 678 503 B1**
(45) Veröffentlichungstag und Bekanntmachung des Hinweises auf die Patenterteilung: **26.10.2016**
(21) Anmeldenummer: 12705623.2
(22) Anmeldetag: 22.02.2012
(51) Int. Cl.: E05C 19/16, E05C 9/08, E05C 9/06

(54) **TÜRANORDNUNG MIT MAGNETSCHLIESSUNG**
DOOR ASSEMBLY HAVING A MAGNETIC CLOSURE MECHANISM
ENSEMBLE PORTE À FERMETURE MAGNÉTIQUE

(30) Priorität: 25.02.2011 DE 102011012434; 25.02.2011 DE 102011012436; 25.02.2011 DE 102011012433; 25.02.2011 DE 102011012435
(43) Veröffentlichungstag der Anmeldung: 01.01.2014
(73) Patentinhaber: C E S Control Enclosure Systems GmbH, 61348 Bad Homburg v. d. Höhe (DE)
(72) Erfinder: SCHAAF, Igor, Harry, 77836 Rheinmünster (DE); MAZURA, Paul, 76307 Karlsbad (DE); NICOLAI, Walter, 35418 Buseck (DE); JOCHAM, Simon, 80469 München (DE)
(74) Vertreter: Beyer, Andreas
(86) Internationale Anmeldenummer: PCT/EP2012/000768
(87) Internationale Veröffentlichungsnummer: WO 2012/113550

(56) Entgegenhaltungen:
- EP-A1- 1 659 250
- WO-A1-01/31154
- DE-A1- 2 455 520
- DE-A1- 2 508 524
- DE-A1- 10 312 269
- US-A- 2 446 336

## Beschreibung

Die Erfindung betrifft eine Türanordnung mit Magnetschließung und umfasst eine Tür, die an einer Scharnierseite zur drehbaren Befestigung an einem Türrahmen oder ähnlichem ausgebildet ist und eine Innenseite sowie eine Außenseite hat.

Türen mit Magnetschließung sind wohlbekannt, beispielsweise für Schränke aller Art. Je nach der gewünschten Schließkraft werden einer oder mehrere Magnete in der Tür und geeignete Gegenelemente dazu verwendet, die Tür in einer Schließstellung zu halten. Bei Kühlschränken ist es bekannt, die Magnete in Gestalt eines Magnetbandes und als Bestandteil einer Türdichtung auszuführen, so dass eine mit einer derartigen Magnetschließung versehene Kühlschranktür in ihrer Schließstellung entlang des gesamten Umfangs am Gehäuse des Kühlschranks anliegt und somit den gekühlten Innenraum des Kühlschranks gut nach außen abdichtet. Die zum Öffnen einer solchen Kühlschranktür aufzubringende Kraft ist allerdings nicht unerheblich und kann das Öffnen der Tür in unerwünschter Weise erschweren.

Das Dokument US 2,446,336 offenbart zum Beispiel einen Kühlschrank, dessen Tür mit einem Magnetverschlusssystem ausgestattet ist. Weiterhin offenbart das Dokument DE 103 12 269 A1 eine magneto-mechanische Schließeinrichtung für Türen oder Fenster gemäß dem Oberbegriff des Anspruchs 1.

Der Erfindung liegt die Aufgabe zugrunde, eine universell einsetzbare Türanordnung mit Magnetschließung bereitzustellen, die einerseits falls gewünscht eine hohe Schließkraft bereitstellt und andererseits dennoch leicht und komfortabel, d.h. insbesondere mit wenig Kraft zu öffnen ist. Die bereitzustellende Türanordnung soll vor allem auch für Türen aus Metallblech geeignet sein, die aufgrund ihrer Konstruktion leicht zu einer Verwindung neigen. Ferner soll die bereitzustellende Türanordnung vorzugsweise mit herkömmlichen Türschließmechanismen zusammenwirken können, ohne deren Konstruktionskonzept verändern zu müssen.

Diese Aufgabe ist erfindungsgemäß mit einer Türanordnung gelöst, welche die im Patentanspruch 1 angegebenen Merkmale aufweist. Demnach ist auf der Innenseite in einem Randbereich der Tür an einer der Scharnierseite gegenüberliegenden Griffseite der Tür eine Welle mit einer Drehachse angeordnet, die zumindest im Wesentlichen parallel zur Griffseite verläuft (mit Griffseite ist hier die den Türangeln oder Türscharnieren gegenüberliegende Längsseite einer Tür gemeint). Auf der Außenseite der Tür befindet sich ein Betätigungsorgan, dessen Betätigung eine Drehung der Welle um deren Drehachse bewirkt. An der Welle sind mit Abstand voneinander wenigstens zwei, vorzugsweise jedoch mehrere Magnete befestigt, die durch das Betätigungsorgan zwischen einer Schließstellung, in der sie bei geschlossener Tür mit je einem Gegenmagnet magnetisch anziehend wechselwirken können, und einer Öffnungsstellung drehbar sind, in der die anziehende magnetische Wechselwirkung mit dem jeweils zugeordneten Gegenmagnet zumindest stark abgeschwächt ist. Durch das Verdrehen der Magnete aus ihrer Schließstellung in die Öffnungsstellung wird die Lage der magnetischen Feldlinien, die die in der Tür befindlichen Magnete erzeugen, so verändert, dass die magnetische Anziehungskraft zwischen einem Magneten und dem ihm zugeordneten Gegenmagneten stark abnimmt, wodurch ein Öffnen der Tür viel leichter möglich ist. Bei einer bevorzugten Ausgestaltung werden die an der Welle befestigten Magnete durch das Betätigungsorgan soweit gedreht, dass sie in eine magnetisch abstoßende Stellung bezüglich des jeweils zugeordneten Gegenmagneten gelangen, wodurch die Tür sich quasi von selbst öffnet.

Jeder Gegenmagnet kann feststehend beispielsweise an einem mit der Tür zusammenwirkenden Rahmen befestigt sein.

Die an der Welle befestigten Magnete haben gemäß einer bevorzugten Ausführungsform eine zylindrische Gestalt. Vorteilhaft sind dann die Gegenmagnete komplementär ausgebildet, haben also die Form eines halben Hohlzylinders, in den der zylindrische Türmagnet eingreifen kann. Eine komplementäre Ausgestaltung der Gegenmagnete ist allerdings nicht zwingend notwendig, die Gegenmagnete können beispielsweise auch einfach plattenförmig sein.

In der einfachsten Ausgestaltung ist das Betätigungsorgan ein schwenkbarer Handgriff, der unmittelbar mit der Welle verbunden ist, an der die Magnete befestigt sind. Die Welle und die Magnete führen dann bei einer Schwenkbewegung des Handgriffs exakt dieselbe Drehbewegung aus wie der Handgriff selbst. Alternativ kann der Handgriff um eine zur Drehachse der Welle parallele Achse schwenkbar sein. Auch kann der Handgriff um eine zur Drehachse der Welle rechtwinklige, normal zur Türebene verlaufende Achse schwenkbar sein. In jedem Fall ist der Handgriff so mit der Welle gekoppelt, dass eine Schwenkbewegung des Handgriffs eine Drehung der Welle bewirkt. Das Betätigungsorgan kann auch ein mittels eines Schalters auf der Türaußenseite angesteuerter Elektromotor oder Elektromagnet sein, der geeignet mit der Welle gekoppelt ist, um seine Antriebskraft in eine Drehbewegung der Welle umzusetzen. Unabhängig davon, ob das Betätigungsorgan ein manuelles Betätigungsorgan (z.B. ein Hebel oder ein Drehknopf) oder ein selbsttätiges Betätigungsorgan (z.B. ein Elektromotor, ein Elektromagnet, ein mittels Druckluft oder Hydraulikdruck angetriebener Mechanismus) ist, kann zwischen dem Betätigungsorgan und der Welle ein Getriebe angeordnet sein, welches beispielsweise die Schwenkbewegung eines Handgriffs in eine Drehbewegung der Welle umsetzt, die in gleicher Drehrichtung oder entgegengesetzter Drehrichtung erfolgen kann und deren Drehwinkel kleiner oder größer als der entsprechende Schwenkwinkel des Handgriffs sein kann. Mit einem solchen Getriebe kann beispielsweise eine kleine Schwenkbewegung des Handgriffs bereits dazu ausreichen, die an der Welle befestigten Magnete aus ihrer Schließstellung in die Öffnungsstellung zu drehen.

Wenn eine Magnetschließung längs eines Teils der Griffseite der Tür oder auch entlang der gesamten Griffseite für einen vorgegebenen Einsatzzweck als nicht ausreichend angesehen wird, kann die Tür gemäß einer Weiterbildung an einer oder beiden zu ihrer Griffseite rechtwinkligen Seiten im Randbereich der Tür mit einem oder mehreren feststehenden Magneten versehen sein. Auf diese Weise können zwei oder sogar drei Türseiten mit einer Magnetschließung ausgerüstet werden. Wenn die entlang der Griffseite angeordneten Magnete durch das Betätigungsorgan in ihre Öffnungsstellung gedreht worden sind, lassen sich auch die feststehenden Magnete, die längs einer oder beider zur Griffseite rechtwinkligen Türseiten angeordnet sind, relativ leicht von zugehörigen Gegenelementen lösen.

Alternativ kann die Tür an einer oder beiden zu ihrer Griffseite rechtwinkligen Seite im Randbereich der Tür weitere drehbar gelagerte Wellenabschnitte aufweisen, an denen ebenfalls einer oder mehrere Magnete befestigt sind und die im jeweiligen Türeckbereich durch einen flexiblen Abschnitt, d.h. eine flexible Welle, mit der Welle an der Griffseite verbunden sind. Demzufolge wirkt eine durch das Betätigungsorgan hervorgerufene Bewegung nicht nur auf die Welle bzw. die Wellenabschnitte an der Griffseite, sondern wird darüber hinaus auch auf die Wellenabschnitte übertragen, die an einer oder beiden zur Griffseite rechtwinkligen Türseiten vorhanden sind. Eine Betätigungsbewegung des Betätigungsorgans dreht somit alle Magnete zwischen der Schließstellung und der Öffnungsstellung hin und her, wodurch ein Öffnen der Tür weiter erleichtert ist.

Wenn ein Randbereich der Tür ein U-förmiges Querschnittsprofil hat, dann ist gemäß einer bevorzugten Ausgestaltung jeder Wellenabschnitt der Welle, an der die Magnete befestigt sind, in dem U-förmigen Querschnittsprofil mittels mehrerer Spreizklammern gelagert, die zwei an einer Basis miteinander verbundene Spreizarme aufweisen, deren freie Enden türeinwärts gewandt sind, wobei die Basis dem Grund des U-förmigen Querschnittsprofils benachbart angeordnet ist und jede Spreizklammer den U-förmigen Querschnitt des Randbereichs der Tür zumindest im Wesentlichen ausfüllt. Eine Befestigung und Lagerung der Welle bzw. der einzelnen Wellenabschnitte mittels solcher Spreizklammern ermöglicht eine schnelle und präzise positionierte Montage der Wellenabschnitte und sorgt aufgrund der guten Abstützung am Umfang des U-förmigen Querschnitts zugleich für eine stabile Wellenlagerung.

Vorzugsweise ist jeweils ein Endbereich eines der Spreizarme, der dem zugehörigen freien Armende benachbart ist, zur drehbaren Lagerung der Wellenabschnitte ausgebildet, beispielsweise mittels einer runden Öffnung, durch die sich ein zugehöriger Wellenabschnitt erstreckt, wobei der Durchmesser der Öffnung nur minimal größer ist als der Außendurchmesser des zu lagernden Wellenabschnitts.

Zur weiteren Vereinfachung der Montage weist gemäß einer bevorzugten Ausführungsform ein türinnenseitiger Spreizarm, d.h. ein nach innen gewandter Spreizarm jeder Spreizklammer einen Anschlag auf, der ein Einschieben der Spreizklammer in das U-förmige Querschnittsprofil hinein begrenzt. Mittels solcher Anschläge ist sichergestellt, dass alle Spreizklammern, die zur Lagerung von Wellenabschnitten eingesetzt werden, sich bezüglich des U-förmigen Querschnittsprofils in einander entsprechender Position befinden. Insbesondere wird dadurch sichergestellt, dass zur drehbaren Lagerung der Wellenabschnitte ausgebildete Durchgangsöffnungen in den Spreizarmen miteinander fluchten.

Bei einer Verwendung der beschriebenen Spreizklammern zur drehbaren Lagerung der Wellenabschnitte ist vorzugsweise jeder drehbare Magnet zwischen zwei Spreizklammern angeordnet. Auf diese Weise wird jeder Wellenabschnitt dort, wo aufgrund eines Magnets ein höheres Gewicht vorhanden ist, besonders gut abgestützt und zudem verhindert, dass der Magnet sich axial auf der Welle verschieben kann. Die zwei Spreizklammern dienen in diesem Fall auch als seitliche Führung eines Magneten.

Zur besonders guten Abdichtung kann die erfindungsgemäße Türanordnung eine umlaufende Dichtung aufweisen, die auf der Türinnenseite radial außerhalb der Magnete befestigt ist. Auf diese Weise sind die Magnete bei geschlossener Tür durch die sich vollständig um die Tür herum erstreckende Dichtung vor unerwünschten Einflüssen, beispielsweise vor Schmutz, geschützt.

Eine erfindungsgemäße Türanordnung, wie sie vorstehend in ihren unterschiedlichen Ausgestaltungsmöglichkeiten beschrieben worden ist, eignet sich für viele Einsatzzwecke, besonders aber auch zur Verwendung an Schaltschränken aller Art.

Eine derzeit bevorzugte Ausführungsform einer erfindungsgemäßen Türanordnung wird im Folgenden anhand der beigefügten, schematischen Zeichnungen näher erläutert. Es zeigt:
- Figur 1a: eine Draufsicht auf eine Außenseite einer Tür,
- Figur 1b: eine Draufsicht auf eine Innenseite der Tür aus Figur 1a,
- Figur 2: einen Handgriff der Tür aus Figur 1 in isolierter, räumlicher Darstellung,
- Figur 3: den Handgriff aus Figur 2 eingebaut in die Tür aus Figur 1,
- Figur 4: einen Eckbereich der Tür aus Figur 1 in räumlicher Darstellung, und
- Figur 5: eine räumliche Schnittansicht einer sich in Schließstellung befindenden Tür im Bereich eines drehbaren Magneten der Türanordnung.

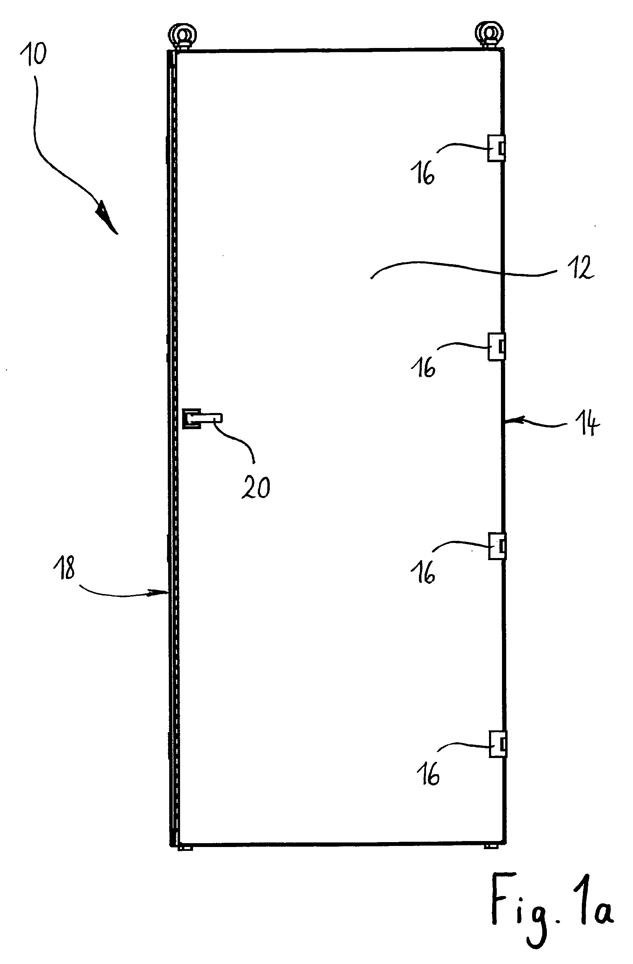

Fig. 1a zeigt eine allgemein mit 10 bezeichnete Türanordnung mit Magnetschließung, deren Hauptbestandteil eine Tür 12 mit einer Innenseite und einer in Fig. 1a gezeigten Außenseite ist. Die Tür ist an einer Scharnierseite 14 zur drehbaren Befestigung an einem hier nicht gezeigten Türrahmen beispielsweise eines Schrankes oder ähnlichem ausgebildet. An der Scharnierseite 14 sind hierzu mehrere Türangeln oder Scharniere 16 in üblicher Weise befestigt.

An einer der Scharnierseite 14 gegenüberliegenden Griffseite 18 der Tür 12 ist auf ihrer Außenseite ein hier als Handgriff 20 ausgestaltetes Betätigungsorgan angebracht, das zum Öffnen und Schließen der Tür 12 dient.

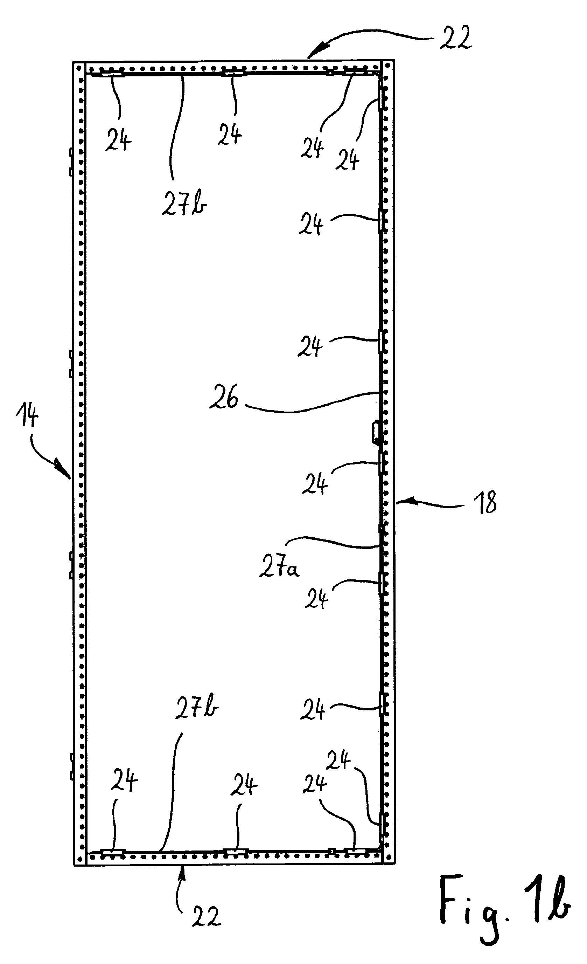

Fig. 1b zeigt in Draufsicht die Innenseite der Tür 12. Entlang der Griffseite 18 der Tür 12 sowie entlang der beiden sich rechtwinklig zur Griffseite 18 erstreckenden Türquerseiten 22 sind jeweils mehrere Magnete 24 nahe dem Rand der Tür mit Abstand voneinander angeordnet. Mittels dieser Magnete 24 wird eine Magnetschließung der Tür 12 am zugeordneten Türrahmen erreicht.

Längs der Griffseite 18 sind die Magnete 24 an einer Welle 26 befestigt, die im Randbereich der Tür 12 parallel zur Griffseite 18 verläuft und um ihre Mittellängsachse A drehbar ist. Der Handgriff 20 ist um eine zur Achse A parallele Achse schwenkbar und mit der Welle 26 so verbunden, dass eine Schwenkbewegung des Handgriffs 20 eine Drehung der Welle 26 zur Folge hat.

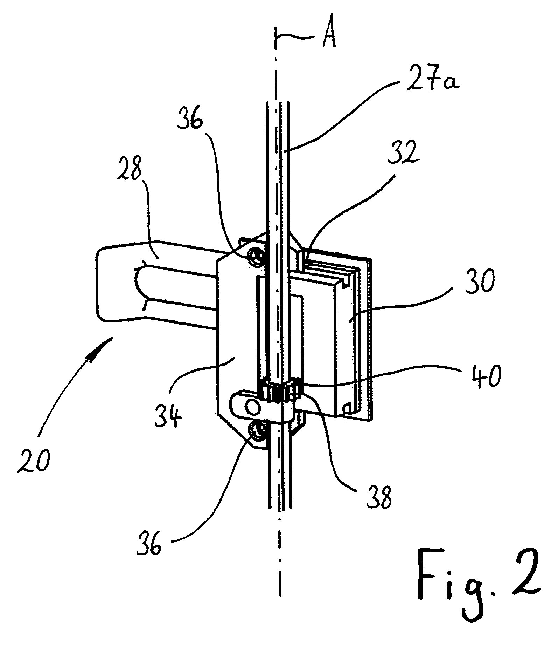

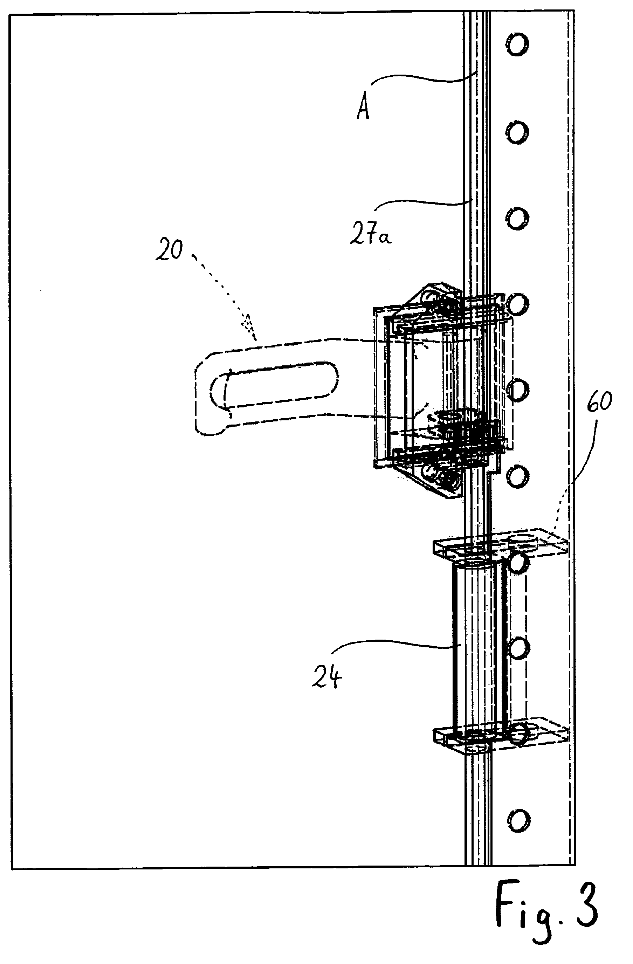

Bezugnehmend auf die Fig. 2 und 3 wird nun das Zusammenspiel zwischen dem Handgriff 20 und der Welle 26 sowie den an ihr befestigten Magneten 24 näher erläutert. Der Handgriff 20 hat einen Griffabschnitt 28 sowie einen damit hier einstückig verbundenen Betätigungsabschnitt 30, der um einen Bolzen 32 verschwenkbar ist, der parallel zur Achse A verläuft. Der Bolzen 32 ist in einem Getriebegehäuse 34 gelagert, in welchem ein Abschnitt 27a der Welle 26 drehbar gelagert ist. Das Getriebegehäuse 34 dient auch zur Befestigung der gesamten Handgriffeinheit an der Innenseite der Tür 12. Hierzu sind im Getriebegehäuse 34 zwei Schraubgewindebohrungen 36 vorhanden, in die nicht gezeigte Befestigungsschrauben gedreht werden können.

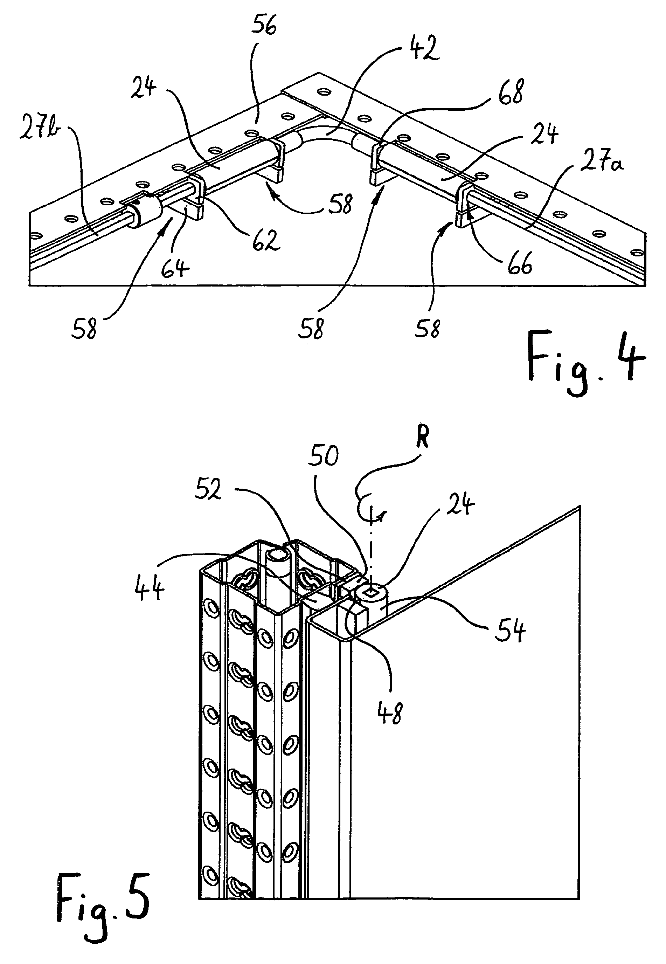

Auf der hier als Vierkantstab ausgebildeten Welle 26 bzw. dem Wellenabschnitt 27a ist ein Ritzel 38 drehfest angeordnet, welches mit einem am Betätigungsabschnitt 30 des Handgriffs 20 ausgebildeten Zahnrad 40 kämmt. Eine Schwenkbewegung des Handgriffs 20 um den Bolzen 32 wird somit vom Zahnrad 40 auf das Ritzel 38 übertragen und führt zu einer Drehung der Welle 26 um die Achse A in einer der Schwenkbewegung entgegengesetzten Drehrichtung. Das aus Ritzel 38 und Zahnrad 40 bestehende Getriebe kann dabei so ausgelegt sein, dass die Schwenkbewegung des Handgriffs 20 nicht 1:1 auf die Welle 26 übertragen wird, sondern übersetzt oder untersetzt wird. In jedem Fall werden - siehe Fig. 3 - bei einem Verschwenken des Handgriffs 20 zum Öffnen der Tür 12 die an der Welle 26 befestigten Magnete aus einer Schließstellung, in der sie mit Gegenmagneten 50 (siehe Fig. 5) im Türrahmen so zusammenwirken, dass sich eine magnetische Anziehungskraft zwischen der Tür 12 und dem Türrahmen ergibt, in eine Öffnungsstellung verdreht, in der diese magnetische Anziehungskraft mit dem jeweils zugeordneten Gegenmagnet 50 zumindest stark abgeschwächt ist, um die Tür 12 leicht öffnen zu können.

Damit auch längs der Türquerseiten 22 angeordnete Wellenabschnitte 27b der Welle 26 die Drehung des längs der Griffseite 18 angeordneten Wellenabschnitts 27a mitmachen, ist der Wellenabschnitt 27a im Bereich der oberen und unteren Türecke mittels jeweils einer flexiblen Welle 42 mit den Wellenabschnitten 27b verbunden (siehe Fig. 4).

Fig. 5 veranschaulicht beispielhaft, welche Bewegung jeder Magnet 24 ausführt, wenn der Handgriff 20 zum Öffnen der Tür 12 betätigt wird. In Fig. 5 ist die Schließstellung der Tür 12 wiedergegeben, in der der Randbereich der Tür 12 über eine Dichtung 44 am Türrahmen 46 anliegt. Die Dichtung 44 befindet sich dabei radial gesehen außerhalb der Magnete 24, so dass in der Schließstellung der Tür 12 die Magnetschließeinrichtung von der Dichtung 44 allseitig umgeben und dadurch geschützt wird.

Ein exemplarisch im Schnitt gezeigter Magnet 24 nimmt in der Schließstellung eine Position ein, in der sein Südpol 48 unmittelbar gegenüber dem Nordpol eines Gegenmagneten 50 angeordnet ist. Der Gegenmagnet 50 ist hier plattenförmig ausgeführt und mittels einer Trägerplatte 52 am Türrahmen 46 befestigt. Obwohl hier nicht gezeigt, kann die dem Magnet 24 zugewandte Seite des Gegenmagneten 50 auch komplementär zur Form des hier zylindrischen Magneten 24 ausgebildet sein. Im dargestellten Fall hätte der Gegenmagnet 50 dann eine in etwa halbzylindrische Ausnehmung auf seiner dem Magnet 24 zugewandten Seite, in die der Magnet 24 in der Schließstellung eintaucht.

Bei einer Öffnungsbewegung des Handgriffs 20 wird diese Schwenkbewegung wie beschrieben auf die Wellenabschnitte 27a und 27b der Welle 26 übertragen, so dass sich jeder Magnet 24 in Richtung eines Pfeils R mindestens so weit dreht, bis die zwischen dem Südpol 48 und dem Gegenmagnet 50 bestehende, magnetische Anziehung stark abgeschwächt oder aufgehoben ist, und vorzugsweise soweit dreht, bis ein Nordpol 54 jedes Magneten 24 dem Nordpol des korrespondierenden Gegenmagneten 50 gegenüberliegt. In letzterem Fall ist die magnetische Anziehungskraft zwischen jedem Magnet 24 und dem zugehörigen Gegenmagnet 50 nicht nur abgeschwächt oder aufgehoben, sondern es kommt zu einer Abstoßungskraft zwischen jedem Magnet 24 und dem entsprechenden Gegenmagnet 50, wodurch die Tür 12 sich quasi kraftlos öffnen lässt.

Ein Zurückschwenken des Handgriffs 20 in seine Ausgangsstellung bei geöffneter Tür 12 bewegt die Magnete 24 wieder zurück in ihre Schließstellung, in der bei einem erneuten Schließen der Tür 12 magnetische Anziehungskräfte zwischen jedem Magnet und dem zugeordneten Gegenmagnet 50 bestehen. Der Handgriff 20 kann federnd in seine Ausgangsstellung vorgespannt sein, so dass sich ein aktives Zurückschwenken des Handgriffs 20 nach einem Öffnungsvorgang erübrigt.

Unter erneuter Bezugnahme auf die Fig. 4 wird nun die Lagerung der Welle 26 bzw. der Wellenabschnitte 27a und 27b näher erläutert. Unterstellt sei hierbei, dass die Tür 12 beispielsweise aus Stahlblech besteht und einen Randbereich 56 aufweist, der durch mehrfaches Umkanten des Stahlblechs ein U-förmiges Querschnittsprofil hat. In dieses U-förmige Querschnittsprofil sind Spreizklammern 58 eingeschoben, die jeweils zwei an einer Basis 60 (siehe Fig. 3) miteinander verbundene Spreizarme 62, 64 aufweisen, deren freie Enden türeinwärts weisen und von denen im gezeigten Ausführungsbeispiel der türinnenseitige Spreizarm 62 in seinem dem freien Armende benachbarten Endbereich zur drehbaren Lagerung der Welle 26 ausgebildet ist, indem er eine runde Öffnung 66 enthält, durch die sich die Welle 26 erstrecken kann. An diesem Endbereich des Spreizarms 62 ist ferner ein Anschlag 68 ausgebildet, der ein Einschieben der Spreizklammer 58 in das U-förmige Querschnittsprofil hinein begrenzt und somit dafür sorgt, dass alle Spreizklammern 58 sich nach ihrem Einschieben in einer gleichen Stellung bezüglich des U-förmigen Querschnittsprofils befinden, in der die Basis 60 dem Grund des U-förmigen Querschnittsprofils benachbart angeordnet ist oder an diesem Grund anliegt. In dieser Stellung fluchten die runden Öffnungen 66 miteinander.

Wie dargestellt sind jeweils zwei Spreizklammern 58 beidseits eines drehbaren Magneten 24 angeordnet und dienen somit auch zur seitlichen Führung des Magneten 24.

Durch Zusammendrücken der Spreizarme 62, 64 an ihrem freien Ende aufeinander zu lässt sich jede Spreizklammer 58 leicht aus dem U-förmigen Querschnittsprofil entfernen.

## Patentansprüche

1. Türanordnung (10) mit Magnetschließung, mit:
- einer Tür (12), die an einer Scharnierseite (14) zur drehbaren Befestigung an einem Türrahmen oder ähnlichem ausgebildet ist und eine Innenseite sowie eine Außenseite hat,
- einer auf der Innenseite in einem Randbereich (56) der Tür (12) an einer der Scharnierseite (14) gegenüberliegenden Griffseite (18) der Tür angeordneten Welle (26) mit einer Drehachse (A), die zumindest im Wesentlichen parallel zur Griffseite verläuft,
- einem Betätigungsorgan an der Außenseite der Tür, dessen Betätigung eine Drehung der Welle (26) um die Achse (A) bewirkt, und
- mehreren Magneten (24), die mit Abstand voneinander an der Welle (26) befestigt sind und durch eine Betätigung des Betätigungsorgans zwischen einer Schließstellung und einer Öffnungsstellung drehbar sind,
**dadurch gekennzeichnet, dass**
- in der Schließstellung die Magneten (24) mit je einem Gegenmagnet (50) magnetisch anziehend wechselwirken,
wobei sich eine magnetische Anziehungskraft zwischen der Tür und dem Türrahmen ergibt,
- in der Öffnungsstellung die anziehende magnetische Wechselwirkung mit dem jeweils zugeordneten Gegenmagnet (50) zumindest stark abgeschwächt ist, und
- die Gegenmagneten (50) der Türinnenseite gegenüberliegend angeordnet sind.

2. Türanordnung nach Anspruch 1,
**dadurch gekennzeichnet, dass** die Magnete (24) eine zylindrische Gestalt haben.

3. Türanordnung nach Anspruch 1 oder 2,
**dadurch gekennzeichnet, dass** zwischen dem Betätigungsorgan und der Welle (26) ein Getriebe angeordnet ist.

4. Türanordnung nach einem der Ansprüche 1 bis 3,
**dadurch gekennzeichnet, dass** die Tür (12) an einer oder beiden zu ihrer Griffseite (18) rechtwinkligen Seiten im Randbereich der Tür (12) mit einem oder mehreren feststehenden Magneten versehen ist.

5. Türanordnung nach einem der Ansprüche 1 bis 3,
**dadurch gekennzeichnet, dass** die Tür (12) an einer oder beiden zu ihrer Griffseite (18) rechtwinkligen Seiten im Randbereich der Tür (12) drehbar gelagerte Wellenabschnitte (27b) aufweist, die im jeweiligen Türeckbereich durch einen flexiblen Abschnitt (42) mit der Welle (26) an der Griffseite zur gemeinsamen Drehung verbunden sind und an denen ebenfalls einer oder mehrere Magnete (24) befestigt sind.

6. Türanordnung nach einem der vorhergehenden Ansprüche,
**dadurch gekennzeichnet, dass** das Betätigungsorgan ein um eine zur Drehachse (A) der Welle (26) parallele Achse schwenkbarer Handgriff (20) ist.

7. Türanordnung nach einem der Ansprüche 1 bis 5,
**dadurch gekennzeichnet, dass** das Betätigungsorgan ein um eine zur Drehachse (A) der Welle (26) rechtwinklige, normal zur Türebene verlaufende Achse schwenkbarer Handgriff (20) ist.

8. Türanordnung nach einem der vorhergehenden Ansprüche,
**dadurch gekennzeichnet, dass** der Randbereich (56) der Tür (12) ein U-förmiges Querschnittsprofil hat und jeder Wellenabschnitt (27a, 27b) in dem U-förmigen Querschnittsprofil mittels mehrerer Spreizklammern (58) gelagert ist, die zwei an einer Basis (60) miteinander verbundene Spreizarme (62, 64) aufweisen, deren freie Enden türeinwärts gewandt sind, wobei die Basis (60) dem Grund des U-förmigen Querschnittsprofils benachbart angeordnet ist und jede Spreizklammer (58) den U-förmigen Querschnitt zumindest im Wesentlichen ausfüllt.

9. Türanordnung nach Anspruch 8,
**dadurch gekennzeichnet, dass** jeweils ein Endbereich eines der Spreizarme (62), der dem zugehörigen freien Armende benachbart ist, zur drehbaren Lagerung der Wellenabschnitte ausgebildet ist.

10. Türanordnung nach Anspruch 8 oder 9,
**dadurch gekennzeichnet, dass** ein türinnenseitiger Spreizarm (62) jeder Spreizklammer (58) einen Anschlag (68) aufweist, der ein Einschieben der Spreizklammer (58) in das U-förmige Querschnittsprofil hinein begrenzt.

11. Türanordnung nach einem der Ansprüche 8 bis 10,
**dadurch gekennzeichnet, dass** jeder drehbare Magnet (24) zwischen zwei Spreizklammern (58) angeordnet ist.

12. Türanordnung nach einem der vorhergehenden Ansprüche,
**dadurch gekennzeichnet, dass** auf der Türinnenseite radial außerhalb der Magnete eine umlaufende Dichtung (44) befestigt ist.

## Claims

1. A door assembly (10) having a magnetic closure mechanism, comprising
- a door (12) which is adapted at a hinge side (14) for rotatable attachment at a door frame or the like, and which has an inner side and an outer side,
- a shaft (26) arranged on the inner side in a peripheral area (56) of the door (12) on handle side (18) of the door opposite the hinge side (14) and having an axis of rotation (A) which extends at least essentially parallel to the handle side,
- an actuating element on the outer side of the door, the actuation of which effects a rotation of the shaft (26) about the axis (A), and
- a plurality of magnets (24) which are attached to the shaft (26) spaced from one another and are rotatable by the actuation of the actuating element between a closing position and an opening position,
**characterised in that**
- in the closing position, the magnets (24) and one counter-magnet (50) each interact in a magnetically attracting manner, resulting in a magnetic attracting force between the door and the door frame,
- in the opening position, the attracting magnetic interactive effect with the respectively associated counter-magnet (50) is at least considerably weakened, and
- the counter-magnets (50) are arranged opposite the inner side of the door.

2. The door assembly according to Claim 1,
**characterised in that** the magnets (24) are of cylindrical shape.

3. The door assembly according to Claim 1 or 2,
**characterised in that** a gearing is arranged between the actuating element and the shaft (26).

4. The door assembly according to one of Claims 1 to 3,
**characterised in that** the door (12) is provided with one or a plurality of fixed magnets on one or both sides extending at right angles to its handle side (18) in the peripheral area of the door (12).

5. The door assembly according to one of Claims 1 to 3,
**characterised in that** the door (12) comprises rotatably supported shaft portions (27b) on one or both sides extending at right angles to its handle side (18) in the peripheral area of the door (12), which are connected to the shaft (26) in the respective door corner area by a flexible portion (42) for common rotation, and on which also one or a plurality of magnets (24) are attached.

6. The door assembly according to one of the preceding claims,
**characterised in that** the actuating element is a handle (20) which is pivotable about an axis which is parallel to the axis of rotation (A) of the shaft (26).

7. The door assembly according to one of Claims 1 to 5,
**characterised in that** the actuating element is a handle (20) which is pivotable about an axis extending normal to the door plane and at right angles to the axis of rotation (A) of the shaft (26).

8. The door assembly according to one of the preceding claims,
**characterised in that** the peripheral area (56) of the door (12) has a U-shaped cross-sectional profile and each shaft portion (27a, 27b) is supported in the U-shaped cross-sectional profile by means of several expansion clamps (58) which comprise two expansion arms (62, 64) connected to each other at a base (60), the free ends thereof facing toward the door body, wherein the base (60) is arranged adjacent to the bottom of the U-shaped cross-sectional profile and each expansion clamp (58) at least essentially fills the U-shaped cross-sectional profile.

9. The door assembly according to Claim 8,
**characterised in that** one end portion each of one of the expansion arms (62), which is adjacent to the respective free end of the arm is adapted to rotatably support the shaft portions.

10. The door assembly according to Claim 8 or 9,
**characterised in that** an expansion arm (62) of each expansion clamp (58) on the inner side of the door comprises a stop (68) which limits an insertion of the expansion clamps (58) into the U-shaped cross-sectional profile.

11. The door assembly according to one of Claims 8 to 10,
**characterised in that** each rotatable magnet (24) is arranged between two expansion clamps (58).

12. The door assembly according to one of the preceding claims,
**characterised in that** a circumferentially extending seal (44) is attached to the inner side of the door radially beyond the magnets.

## Revendications

1. Ensemble porte (10) à fermeture magnétique, comprenant :
- une porte (12) qui, sur un coté charnière (14), est agencée pour être fixée de manière rotative à un cadre de porte ou analogue, et qui présente une face interne et une face externe,
- un arbre (26) disposé du côté poignée (18) opposé au côté charnière (14) sur la face interne dans une zone de bord (56) de la porte (12), avec un axe de rotation (A) qui s'étend au moins sensiblement parallèlement au côté poignée (18),
- un organe d'actionnement disposé sur la face externe de la porte, dont l'actionnement provoque une rotation de l'arbre (26) autour de l'axe (A), et
- plusieurs aimants (24) qui sont fixés sur l'arbre (26) à distance les uns des autres et entraînés en rotation entre une position fermée et une position ouverte moyennant un actionnement de l'organe d'actionnement,
**caractérisé en ce que**
- dans la position fermée, chacun des aimants (24) interagit par attraction magnétique avec un contre-aimant (50) respectif, produisant une force d'attraction magnétique entre la porte et le cadre de porte,
- dans la position ouverte, l'interaction par attraction magnétique avec le contre-aimant (50) respectif est au moins sensiblement affaiblie, et
- les contre-aimants (50) sont disposés en face de la face interne de la porte.

2. Ensemble porte selon la revendication 1,
**caractérisé en ce que** les aimants (24) ont une forme cylindrique.

3. Ensemble porte selon la revendication 1 ou 2,
**caractérisé en ce qu'**un engrenage est disposé entre l'organe d'actionnement et l'arbre (26).

4. Ensemble porte selon l'une des revendications 1 à 3,
**caractérisé en ce que** la porte (12) est pourvue d'un ou plusieurs aimants fixes sur une ou les deux faces perpendiculaires à son côté poignée (18) dans la zone de bord de la porte (12).

5. Ensemble porte selon l'une des revendications 1 à 3,
**caractérisé en ce que** la porte (12) présente sur une ou les deux faces perpendiculaires à son côté poignée (18), dans la zone de bord de la porte (12), des portions d'arbre (27b) montées tournantes qui sont reliées dans la zone d'angle de porte respective, par une portion flexible (42), à l'arbre (26) du côté poignée pour leur rotation commune, et sur lesquelles un ou plusieurs aimants (24) sont également fixés.

6. Ensemble porte selon l'une des revendications précédentes,
**caractérisé en ce que** l'organe d'actionnement est une poignée (20) pouvant pivoter autour d'un axe parallèle à l'axe de rotation (A) de l'arbre (26).

7. Ensemble porte selon l'une des revendications 1 à 5,
**caractérisé en ce que** l'organe d'actionnement est une poignée (20) pouvant pivoter autour d'un axe perpendiculaire à l'axe de rotation (A) de l'arbre (26), s'étendant normalement au plan de la porte.

8. Ensemble porte selon l'une des revendications précédentes,
**caractérisé en ce que** la zone de bord (56) de la porte (12) a un profil à section transversale en U et chaque portion d'arbre (27a, 27b) est montée dans le profil à section transversale en U au moyen de plusieurs brides à écartement (58) qui présentent deux bras écartables (62, 64) reliés entre eux à une base (60), dont les extrémités libres sont tournées vers l'intérieur de la porte, la base (60) étant disposée adjacente au fond du profil à section transversale en U et chaque bride à écartement (58) remplissant au moins sensiblement la section transversale en U.

9. Ensemble porte selon la revendication 8,
**caractérisé en ce qu'**une zone d'extrémité de l'un des bras écartables (62) qui est adjacente à l'extrémité libre du bras associée, est agencée pour le montage rotatif des portions d'arbre.

10. Ensemble porte selon la revendication 8 ou 9,
**caractérisé en ce qu'**un bras écartable (62), disposé sur la face intérieure de la porte, de chaque bride à écartement (58) présente une butée (68) qui limite une introduction de la bride à écartement (58) dans le profil à section transversale en U.

11. Ensemble porte selon l'une des revendications 8 à 10,
**caractérisé en ce que** chaque aimant tournant (24) est disposé entre deux brides à écartement (58).

12. Ensemble porte selon l'une des revendications précédentes,
**caractérisé en ce qu'**un joint périphérique (44) est fixé sur la face intérieure de la porte radialement à l'extérieur des aimants.
